(19) Europäisches Patentamt
European Patent Office
Office européen des brevets

(11) **EP 4 682 108 A1**

(12) **EUROPEAN PATENT APPLICATION**

(43) Date of publication:
**21.01.2026 Bulletin 2026/04**

(21) Application number: **24188886.6**

(22) Date of filing: **16.07.2024**

(51) International Patent Classification (IPC):
**C01G 53/00** $^{(2025.01)}$   **H01M 4/00** $^{(2006.01)}$

(52) Cooperative Patent Classification (CPC):
**C01G 53/42; C01G 53/504; C01G 53/506; H01M 4/525;** C01P 2002/52; C01P 2004/60; C01P 2004/61

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Umicore**
**1000 Brussels (BE)**

(72) Inventors:
- **KWON, Ji-Yeong**
**331-200 Cheonan (KR)**
- **KIM, JuHee**
**331-200 Cheonan (KR)**
- **KIM, JiHye**
**331-200 Cheonan (KR)**
- **RYU, Woon-Hyoung**
**331-200 Cheonan (KR)**

(74) Representative: **Umicore RDI Patent Department**
**Watertorenstraat 33**
**2250 Olen (BE)**

(54) **METHOD FOR MANUFACTURING A CATHODE ACTIVE MATERIAL**

(57)    A method for manufacturing a cathode active material wherein:
- a source of sintering promotor is added to a mixture powder including Li and Ni containing precursor,
- the mixture is loaded in a stack of trays wherein a first tray loaded with a first faction of the mixture is laid over a second tray loaded with a second fraction of the mixture, and
- the stack of trays is conveyed into a furnace, thereby positioning the first tray at a first point location in the furnace and positioning the second tray at a second point location in the furnace, followed by a heat treatment of the stack of trays that is performed with a differential of temperature between the first point location and the second point location.

**Description**

**TECHNICAL FIELD**

The present disclosure relates to a method for manufacturing a cathode active material (hereafter referred to as CAM) powder. The CAM is destined to be used in a lithium (hereafter referred to as Li)-ion secondary battery. The CAM is manufactured from a precursor thereof. In the framework of the present disclosure, the terms "CAM powder" and "CAM" can be used interchangeably.

The term "a cathode active material" as used herein and claimed is defined as a material which is electrochemically active in a positive electrode or cathode. By active material, it must be understood to be a material capable of capturing and releasing Li ions, also referred as to Li (de)intercalation, when subjected to a voltage change over a predetermined period of time.

The term "precursor (of a CAM) or (CAM) precursor" as used herein and claimed is defined as a material suitable for manufacturing a cathode material. By precursor, it must be understood a material that requires to be reacted with a Li ions source to make the cathode active material.

The method according to the disclosure comprises a step of mixing a Li source together with a precursor of the CAM as a source of transition metal elements to obtain a mixture.

The term "comprises or comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

The mixture is then loaded in at least two trays of a stack of trays. The term "trays" as used herein and claimed, refers to containers or receptacles configured to receive and convey the mixture powder into a furnace. These containers are generally open.

In the method according to the disclosure, the stack of trays loaded with the CAM precursor and Li source mixture is then conveyed, for instance by a conveyor belt on which the trays are loaded, into the furnace and subjected to a heat treatment at a predetermined temperature, thereby obtaining sintered materials, each of the sintered materials resulting from the heat treatment (or sintering) of the mixtures loaded in each of the trays. During the heat treatment, lithiation occurs. Lithiation means that Li ions from the Li source do react with the transition metals of the CAM precursor, thereby forming sintered materials including lithium-comprising secondary particles, each of the secondary particles consisting of a plurality of primary particles which size can be controlled during sintering. Parameters controlling primary particles size are for instance the heat treatment (or sintering) temperature and duration thereof.

In the framework of the present disclosure, the terms "heat treatment" and "sintering" can be used interchangeably.

Typically, each of the sintered materials can be subjected to further post sintering manufacturing steps comprising for instance milling, then grinding and sieving, thereby obtaining CAM powders.

A CAM powder resulting from milling of a sintered material has standalone particles, each of them consisting of either one primary particle or a plurality of primary particles. The plurality of primary particles of a standalone CAM powder particle includes a number of primary particles ranging from at least two to at most twenty. The number of primary particles constituting the standalone particle is determined based upon a scanning electron microscopy (hereafter referred to as SEM) image. In the context of the present disclosure, primary particles of the standalone particle can be distinguished from each other in a SEM image by observing grain boundaries between them. The terms "grain boundary" can be defined as an interface between two primary particles, for instance wherein atomic planes of each of the two primary particles are aligned to different orientations and meet at the grain boundary as a crystalline discontinuity. An edge of a primary particle includes at least partially a grain boundary thereof.

Milling can be performed to achieve a CAM powder having a (standalone) particle size distribution (hereafter referred to as PSD) with a small median particle size (hereafter referred to as D50), e.g. having a D50 between 2.0 $\mu$m and 4.0 $\mu$m.

Therefore the term "PSD" refers to the distribution of the standalone particles of the CAM powder.

The term "D50" as used herein and claimed is defined here as the particle size at 50% of the cumulative volume% distributions.

To each tray of the stack of trays corresponds a batch of CAM powder. In a final step, several batches of CAM from the different trays are usually mixed together to obtain a final CAM powder.

A final NMC CAM powder (i.e., a CAM comprising nickel - hereafter referred to as Ni, manganese - hereafter referred to as Mn, and cobalt - hereafter referred to as Co) having a small D50 can have a high-power performance in a battery.

In the framework of the present disclosure, the terms "CAM" and "CAM powder" can be used interchangeably.

**BACKGROUND**

CN205505706U (hereafter referred to as CN'706) discloses usage of the stack of trays in a furnace for manufacturing a CAM.

According to CN'706, compared to a configuration wherein unstacked trays are used, a stacking trays configuration allows to heat treat in the furnace a larger amount of mixture by unit of time, thereby having a furnace operating at higher capacity.

However, usage of the stack of trays suffers from several drawbacks. Firstly, when above-described method is employed for manufacturing small D50 NMC CAMs, it is observed that a first PSD of a first NMC CAM from a first tray is different than a second PSD of a second NMC CAM from a second tray that was superimposed on the first tray during the heat treatment.

Therefore, a variability (or inhomogeneity) of CAM's D50 amongst NMC CAM batches from different trays belonging to the same stack of trays is observed. In the framework of the present disclosure, the term "variability or inhomogeneity of D50" is measured with $\Delta$D50 parameter:

- $\Delta$D50 = ABS[V]

-

$$V = ((D50^1 - D50^2)/ D50^1)*100],$$

wherein:

- ABS means an absolute value of V,
- $D50^1$ is a first D50 of a first CAM from a first tray of a stack of trays, and
- $D50^2$ is a second D50 of a second CAM from a second tray of the stack of trays including the first tray.

If $\Delta$D50 does not exceed 10%, then there is no variability and CAM materials from different batches are considered as homogeneous materials.

It is observed that stacked trays-based production of NMC CAMs having a small D50 leads to a $\Delta$D50 > 10%, when manufactured according to the method of CN'706. For instance, a $\Delta$D50 of 12% is observed amongst NMC631 CAMs having a D50 between 2 and 3 $\mu$m and a Ni/(Ni+Mn+Co) ratio of about 60 atomic percent (hereafter referred to as at%), a Mn/(Ni+Mn+Co) ratio of about 30 at%, and a Co/(Ni+Mn+Co) ratio of about 10 at%, these CAMs being manufactured according to stacked trays method of the prior art, as confirmed in CEX1 of the present disclosure.

In the present disclosure, "at%" signifies atomic percentage. The at% or "atomic percent" of a given element means a percentage of atoms of said element among all atoms in a claimed composition. at% can be measured by inductively coupled plasma - optical emission spectrometry (hereafter referred to as ICP-OES).

A final CAM having a $\Delta$D50 of more than 10% may have a higher fraction of small standalone particles with a size of less than 1.5 or 2.0 $\mu$m. The presence of such small particles in the final CAM increases surface area thereof and leads to a deterioration of packaging density and safety of a battery comprising this material. Also, a final CAM with a $\Delta$D50 > 10% may have a higher fraction of large standalone particles with a size of more than 5.0 $\mu$m. The presence of such large particles in the final CAM may deteriorate charging and discharging rate performances of a battery comprising this material. Therefore, the $\Delta$D50 (of the final CAM) is an important design parameter.

Secondly and aside $\Delta$D50 variability or inhomogeneity, usage of a stack of trays in the method of manufacturing CAM may lead to unoptimized sintering of the CAM amongst batches from different trays.

In the framework of the present disclosure, the terms "unoptimized sintering" means that primary particles of CAMs do not have an optimal size. Optimal size is for instance of not less than 1.5 or 2.0 $\mu$m and of no more than 2.5 or 3.0 $\mu$m.

Li ions diffusion plays a critical role in the charging and discharging rate performances of the CAM powder embedded in a battery. This diffusion is influenced by primary particle size. Diffusion can be improved by decreasing this size. However, a too small primary particle size (e.g., < 1.5 or 2.0 $\mu$m) induces safety deterioration (at the battery level) because standalone particles comprising at least one of these too small primary particles have a large surface area. The area of a region in which a side reaction may occur also increases. This side reaction may cause a phase transformation in which the crystal structure of the lithium composite oxide constituting the positive electrode active material powder is changed. Such a phase transformation of the crystal structure in the surface of the positive electrode active material powder is one of the causes of reducing the electrochemical characteristics, such as the lifespan characteristics like IRRQ, of the lithium secondary battery. If the particle size increases, safety improves. If primary particle size is too big (e.g. > 2.5 or 3.0 $\mu$m), then Li ions diffusion is decreased, and rate performance of a battery including this type of particles deteriorates too much.

In a first aspect, it is a first object of the present disclosure to achieve a manufacturing process using stack of trays and allowing controlling $\Delta$D50 of final CAM. It is another object of the disclosure to provide a method wherein homogeneous lithiation amongst CAM from different trays of the stack of trays is ensured.

In a second aspect, it is a second object of the disclosure to provide a final CAM having a homogenous PSD and resulting from an optimized sintering.

## SUMMARY OF THE DISCLOSURE

The first object of the disclosure is achieved by providing a method for manufacturing a CAM according to claim 1, wherein:

- a source of at least one sintering agent, the sintering agent being optionally at least one element Q1 selected from the group of Sr, Mg, Ca, Ba, and Al is added to the mixture powder including Li and a CAM precursor, optionally a Ni containing pCAM,
- the mixture is loaded in a first and second trays of a furnace, the first and second trays are stacked, thereby obtaining a stack of trays wherein the second tray loaded with a first faction of the mixture is laid over the first tray loaded with a second fraction of the mixture,
- the stack of trays is then conveyed into the furnace, thereby positioning the first tray at a first point location in the furnace and positioning the second tray at a second point location in the furnace, followed by a
- heat treatment of the stack of trays that is performed with a temperature differential between the first point location and the second point location, by applying a first temperature $T_1$ at the second point location and a second temperature $T_2$ at the first point

location, thereby heat treating the first fraction of the mixture at $T_1$ and the second fraction of the mixture at $T_2$, with:

-

$$700°C \leq T_1 \leq 1000°C,$$

-

$$T_1 < T_2,$$

-

$$T_2 = T_1 + \Delta T,$$

and

- 0°C < $\Delta$T $\leq$ 15°C, or 2°C $\leq$ $\Delta$T $\leq$ 10°C, or even 5°C $\leq$ $\Delta$T $\leq$ 10°C.

Optionally, $\Delta$T = 8°C $\pm$ 5°C, or = 8°C $\pm$ 2°C.

These sintered materials can be further processed, for instance by undergoing ball milling, more specifically wet ball milling or even wet ultrasonic milling, optionally grinding and subsequently sieving, and finally mixed together to produce the final cathode active material.

It is indeed observed that the method according to claim 1 to produce a final CAM with a $\Delta$D50 $\leq$ 10% and homogeneous lithiation of CAM from different trays of same stack of trays (see below - section **Results**).

Alternatively, at least a first and second trays may be stacked one upon another, thereby obtaining a stack of trays. The mixture is then loaded in the first and second trays, wherein the second tray that is loaded with a first faction of the mixture is laid over the first tray that is loaded with a second fraction of the mixture.

Alternatively, the mixture is loaded in trays of a stack of at least a first and second trays, thereby obtaining the second tray loaded with a first faction of the mixture and laid over the first tray loaded with a second fraction of the mixture.

In the method according to the disclosure, the heat treatment may be performed under oxidizing atmosphere. The terms "oxidizing atmosphere" as used herein and claimed, refer to an atmosphere comprising at least 15 vol%, or at least 20 vol%, or even at least 25 vol% of oxygen ($O_2$). Optionally, the oxidizing atmosphere can be air.

In the method according to the disclosure, the furnace can be a roller hearth kiln (hereafter referred to as RHK). The trays are suitable for being used in the furnace or RHK. Trays may be made of a material that is refractory. A refractory material is a material able to resist any $T_1$ or $T_2$ temperatures.

In the method according to the disclosure, the source of Li can be $Li_2CO_3$.

The source of Sr can be selected from a group consisting of strontium carbonate ($SrCO_3$), strontium nitrate ($Sr(NO_3)_2$), strontium acetate ($Sr(CH_3COO)_2$), or strontium oxide (SrO). Sr source can be $SrCOs$, or SrO. Sr source may be $SrCOs$.

The source of Al can be at least one of: $Al_2O_3$, $Al_2(CO_3)_3$, and $Al(OH)_3$.

The source of Mg can be at least one of: MgO, $MgCOs$, and $Mg(OH)_2$.

The source of Ca can be at least one of: CaO, $CaCOs$, and $Ca(OH)_2$.

The source of Ba can be at least one of: BaO, $BaCOs$, and $Ba(OH)_3$.

In the present disclosure, a source of an element Q2 can be added to the mixture, wherein Q2 is at least one element selected from the group consisting of B, Cr, Fe, Mg, Mo, Na, Nb, S, Si, V, W, Y, Zn, and Zr. Q2 may be different than Q1.

The source of Q2 element can be any oxide, carbonate, nitrate or acetate thereof. For instance, the source of Q2 element can be any oxide, carbonate, nitrate, or acetate of any of B, Cr, Fe, Mg, Mo, Na, Nb, S, Si, V, W, Y, Zn, and Zr.

In the present disclosure, the CAM precursor may include Co and/or Mn.

In the method according to the disclosure, the mixture can be a powder. The mixture may be obtained from dry mixing powders of Li, Ni, Co, Mn, Q1, and Q2 sources.

In the present disclosure, Agilent ICP 720-ES is used as an ICP-OES tool used to measure respective contents of Li, Ni, Mn, Co, Q1 and Q2.

During the heating step, a gradient of temperature may be created between $T_2$ and $T_1$, so as to allow temperature to continuously decrease during heat treatment from the second point location to the first point location.

The method according to the disclosure may include following $T_1$ ranges: $800°C \leq T_1 \leq 1000°C$, or $900°C \leq T_1 \leq 1000°C$, or $950°C \leq T_1 \leq 1000°C$, or $900°C \leq T_1 \leq 960°C$. $T_1$ may be equal to 960°C. Optionally, $T_1 = 1052 + (50 \log 10 (6/t)) - (101*x')$, wherein t is a predetermined heat treatment (or sintering) temperature and x' corresponds to a predetermined Ni content in the mixture, with $0.50 \leq x' \leq 0.98$ and wherein x' = x (at%)/100. For instance, x' = 0.50 and x' = 0.98 correspond to contents x of 50.0 at% and 98.0 at% of Ni, respectively.

Further, the method may include a $T_1$ range $955°C \leq T_1 \leq 960°C$ and a $T_2$ as follows $T_2$ range as follows: $965°C \leq T_2 \leq 970°C$. Alternatively, $T_1 = 960°C$ and $T_2 = 968 °C$.

In the method according to the disclosure, $6°C \leq \Delta T \leq 9°C$, or $7°C \leq \Delta T \leq 8°C$, or even $\Delta T = 11.37 + 2 \log 10 (2/t) - 2 (x'/100)$, wherein t is a predetermined heat treatment (or sintering) temperature and x corresponds to a predetermined Ni content in the mixture, with $0.50 \leq x' \leq 0.98$ and wherein x' = x (at%)/100. For instance, x' = 0.50 and x' = 0.98 correspond to contents x of 50.0 at% and 98.0 at% of Ni, respectively.

The step of heat treating the stack of trays may be conducted during a period of time of at least 5 hours and at most 30 hours, or at least 10 hours and at most 25 hours, or at least 15 hours and at most 25 hours, or at least 20 hours and at most 25 hours, or of 23 hours.

The method according to the disclosure may include an additional step wherein the first and second sintered materials are subjected to a milling step, thereby obtaining a first and second cathode active material powder having a D50 of at least 3.0 $\mu$m and at most 4.0 $\mu$m, or of at least 3.2 $\mu$m and 3.8 $\mu$m.

The method according to the disclosure may include a step of mixing the first and second cathode active material to form a third cathode active material that is the final CAM.

To further increase RHK capacity, the stack of trays may include several trays, and the method according to the disclosure

- the second step consists in loading the mixture into a plurality of refractory trays followed by stacking the plurality of refractory trays each loaded with a fraction of the mixture between the first and second refractory trays, thereby obtaining a stack of several refractory trays, or
- the third step consists in loading the mixture into a plurality of trays disposed between the first and second trays of the stack of trays,
- the fourth step consists in conveying the stack of several refractory trays, each loaded with a fraction of the mixture into the furnace, followed by
- the fifth step consisting of heat treating the stack of plurality of trays, thereby heat treating each of the trays loaded with a fraction of the mixture at an intermediate temperature higher or equal to $T_1$ and lower of equal to $T_2$ to obtain a plurality of sintered materials.

Alternatively, the third step may include a preliminary step of stacking the plurality of trays between the first and second trays before loading the mixture in the trays.

The trays can be conveyed into the furnace by a conveyor belt.

The mixture can have a Li content/((Q1 + Ni) content) (at%/at%) ratio of at least 0.90 and of at most 1.10, or of at least 0.95 and of at most 1.05, or of at least 1.00 and of at most 1.10, or of 1.05 ± 0.05 as determined by ICP-OES.

In the method according to the disclosure, the plurality of sintered materials may be subjected to a milling step, thereby obtaining a plurality of cathode active material powders having a D50 of at least 3.0 μm and at most 4.0 μm, or of at least 3.2 μm and 3.8 μm.

The first, the second and the plurality of cathode active material powders may then be mixed together to form the third or final cathode active material.

In the method according to the disclosure, the mixture may comprise M', wherein M' includes:

- Ni in a content x1, wherein 45.0 at% ≤ x1 ≤ 98.0 at%, relative to M',
- Mn in a content y1, wherein 0.0 at% ≤ y1 ≤ 35.0 at%, relative to M',
- Co in a content z1, wherein 0.0 at% ≤ z1 ≤ 10.0 at%, relative to M',
- Q1, for instance Sr, in a content a1, wherein 0.0 at% < a1 ≤ 5.0 at%, relative to M', and
- Q2 in a content b1, wherein Q2 is an element other than Li, Ni, Co, Mn, and Q1, wherein 0.0 at% ≤ b1 ≤ 5.0 at%, relative to M', and Q2 is at least one element selected from the group consisting of Al, B, Ba, Ca, Cr, Fe, Mg, Mo, Na, Nb, S, Si, Ti, V, W, Y, Zn, and Zr,

wherein x+y+z+a+b is 100.0 at% as determined by ICP-OES.

Ni content in the mixture can be: 50.0 at% ≤ x1 ≤ 70.0 at%, or 60.0 at% ≤ x1 ≤ 65.0 at%, relative to M' and as determined by ICP-OES.

Mn may be present in the mixture in a content: 0.0 at% ≤ y1 ≤ 35.0 at%, or 25.0 at% ≤ y1 ≤ 35.0 at%, or 30.0 at% ≤ y1 ≤ 32.0 at%, relative to M' and as determined by ICP-OES.

Co content in the mixture can be: 0.0 at% ≤ z1 ≤ 8.0 at%, or 0.0 at% ≤ z1 ≤ 7.0 at%, or 5.0 at% ≤ z1 ≤ 8.0 at%, or 5.0 at% ≤ z1 ≤ 7.0 at%, or 6.0 at% ≤ z1 ≤ 7.0 at%, relative to M' and as determined by ICP-OES.

Content of Q1 in the mixture may be of at least 500 ppm (or 0.025 at% relative to M') and at most 2000 ppm (or 0.1 at% relative to M'), or at least 600 ppm (or 0.03 at% relative to M') and at most 1200 ppm (or 0.06 at% relative to M'), or of at least 800 ppm (or 0.04 at% relative to M') and at most 550 ppm (or 0.055 at% relative to M'), or of 1100 ppm (or 0.04 at% relative to M') as determined by ICP-OES. The term "ppm" is used in this document means parts per million on a mass basis.

Q1 can be at least one element of Sr, Mg, Ca, Ba, and Al. Optionally Q1 is Sr.

Content of Q2 in the mixture may be of at least 2000 ppm or of at least 0.1 at% relative to M', and at most 6000 ppm or of at most 0.3 at% relative to M', or at least 2000 ppm (or 0.1 at% relative to M') and at most 2000 ppm (or 0.2 at% relative to M'), or at least 4000 ppm (or 0.1 at% relative to M') and at most 3000 ppm (or 0.15 at% relative to M') as determined by ICP-OES. Q2 can be Zr.

In one embodiment according to the disclosure:

- Ni content in the mixture can be: 50.0 at% ≤ x1 ≤ 70.0 at%, or 60.0 at% ≤ x1 ≤ 65.0 at%, relative to M', and
- Mn may be present in the mixture in a content: 0.0 at% ≤ y1 ≤ 35.0 at%, or 25.0 at% ≤ y1 ≤ 35.0 at%, or 30.0 at% ≤ y1 ≤ 32.0 at%, relative to M', and
- Co content in the mixture can be: 0.0 at% ≤ z1 ≤ 8.0 at%, or 0.0 at% ≤ z1 ≤ 7.0 at%, or 5.0 at% ≤ z1 ≤ 8.0 at%, or 5.0 at% ≤ z1 ≤ 7.0 at%, or 6.0 at% ≤ z1 ≤ 7.0 at%, relative to M', and
- Q1 may be present in the mixture in a content: 0.0 at% ≤ a1 ≤ 0.5 at%, Q1 can be Sr, relative to M', and
- Q2 may be present in the mixture in a content: 0.0 at% ≤ b1 ≤ 0.5 at%, relative to M', Q2 can be Zr and/or Ti, as determined by ICP-OES.

In another embodiment according to the disclosure:

- Ni content in the mixture can be: 60.0 at% ≤ x1 ≤ 65.0 at%, relative to M', and
- Mn may be present in the mixture in a content: 30.0 at% ≤ y1 ≤ 35.0 at%, relative to M', and
- Co content in the mixture can be: 5.0 at% ≤ z1 ≤ 7.0 at%, relative to M', and
- Q1 may be present in the mixture in a content: 0.0 at% ≤ a1 ≤ 0.05 at%, relative to M', Q1 can be Sr, and
- Q2 may be present in the mixture in a content: 0.0 at% ≤ b1 ≤ 0.15 at%, relative to M', Q2 can be Zr and /or Ti, as determined by ICP-OES.

The mixture can have a Li/(x1+y1+z1+a1+b1) (at%/at%) ratio of at least 0.90 and of at most 1.10, or of at least 0.95 and of at most 1.05, or of at least 1.00 and of at most 1.10, or of 1.05 ± 0.05 as determined by ICP-OES.

In the method according to the disclosure, the precursor of the CAM can be an oxide, a hydroxide or an oxyhydroxide of M, and M may comprise:

- Ni in a content $x2$, wherein 45.0 or 49.0 at% $\leq x2 \leq$ 98.0 at%, relative to M,
- Mn in a content $y2$, wherein 0.0 at% $\leq y2 \leq$ 38.0 or 40.0 at%, relative to M, and
- Co in a content $z2$, wherein 0.0 at% $\leq z2 \leq$ 13.0 or 15.0 at%, relative to M,

wherein $x'+y'+z'$ is 100.0 at% as determined by ICP-OES.

Ni content in the precursor composition can be: 55.0 at% $\leq x2 \leq$ 72.0 at%, or 60.0 at% $\leq x2 \leq$ 70.0 at%, relative to M and as determined by ICP-OES.

Mn may be present in the precursor composition in a content: 25.0 at% $\leq y2 \leq$ 40.0 at%, or 30.0 at% $\leq y2 \leq$ 37.0 at%, relative to M and as determined by ICP-OES.

Co content in the precursor composition can be: 0.0 at% $\leq z2 \leq$ 12.0 at%, or 0.0 at% $\leq z2 \leq$ 11.0 at%, or 5.0 at% $\leq z2 \leq$ 12.0 at%, or 5.0 at% $\leq z2 \leq$ 11.0 at%, or 6.0 at% $\leq z2 \leq$ 7.0 at%, relative to M and as determined by ICP-OES.

In another embodiment according to the disclosure:

- The Ni content in the precursor composition can be: 55.0 at% $\leq x2 \leq$ 72.0 at%, or 60.0 at% $\leq x2 \leq$ 70.0 at%, relative to M and as determined by ICP-OES, and
- The Mn may be present in the CAM precursor in a content: 25.0 at% $\leq y2 \leq$ 40.0 at%, or 30.0 at% $\leq y2 \leq$ 37.0 at%, relative to M and as determined by ICP-OES, and
- The Co content in the CAM precursor can be: 0.0 at% $\leq z2 \leq$ 12.0 at%, or 0.0 at% $\leq z2 \leq$ 11.0 at%, or 5.0 at% $\leq z2 \leq$ 12.0 at%, or 5.0 at% $\leq z2 \leq$ 11.0 at%, or 6.0 at% $\leq z2 \leq$ 7.0 at%, relative to M and as determined by ICP-OES.

In the method according to the disclosure, the precursor of the CAM can be an oxide, a hydroxide or an oxyhydroxide of M with M = $Ni_{x2}Mn_{y2}Co_{z2}$, wherein:

- $0.45 \leq x2 \leq 0.98$, or $0.55 \leq x2 \leq 0.72$, or $0.60 \leq x2 \leq 0.70$, and
- $0.0 < y2 \leq 0.40$, or $0.25 \leq y2 \leq 0.40$, or $0.30 \leq y2 \leq 0.37$, and
- $0.00 \leq z2 \leq 0.15$, or $0.00 \leq z2 \leq 0.12$, or $0.00 \leq z2 \leq 0.11$, or $0.05 \leq z2 \leq 0.12$, or $0.05 \leq z2 \leq 0.11$, or $0.06 \leq z2 \leq 0.07$,

wherein $x2+y2+z2 = 1.00$ as determined by ICP-OES.

The second object of the disclosure is achieved by providing a cathode active material powder comprising, or consisting, or consisting essentially of: Li, O and M, wherein M comprises or consists of:

- Ni in a content $x3$, wherein 45.0 at% $\leq x3 \leq$ 98.0 at%, relative to M,
- Mn in a content $y3$, wherein 0.0 at% $\leq y3 \leq$ 35.0 at%, relative to M,
- Co in a content $z3$, wherein 0.0 at% $\leq z3 \leq$ 10.0 at%, relative to M,
- Q1 in a content $a3$, wherein 0.0 at% $< a3 \leq$ 5.0 at%, relative to M, Q1 being at least one the following elements: Sr, Mg, Ca, Ba, and Al, and
- Q2 in a content $b3$, wherein Q is an element other than Li, Ni, Co, Mn, and Q1, wherein 0.0 at% $\leq b3 \leq$ 5.0 at%, relative to M, and Q2 is at least one element selected from the group consisting of B, Cr, Fe, Mg, Mo, Na, Nb, S, Si, Ti, V, W, Y, Zn, and Zr,

wherein $x+y+z+a+b$ is 100.0 at% as determined by ICP-OES, the cathode active material comprising:

- a first cathode active material fraction having first particles consisting of one and/or a plurality of first primary particles, the first cathode active material having a first $D50^1$,
- a second cathode active material fraction having second particles consisting of one and/or a plurality of second primary particles, the second cathode active material having a second $D50^2$,

wherein:

- both $D50^1$ and $D50^2$ are of at least 3.0 $\mu$m and of at most 4.0 $\mu$m, $D50^1 > D50^2$, $\Delta D50 = ((D50^1 - D50^2)/D50^1)*100$, and $5\% \leq \Delta D50 \leq 10\%$, or $5\% \leq \Delta D50 \leq 9\%$, or $6\% \leq \Delta D50 \leq 9\%$, and

- the first and second primary particles having an average size of at least 1.5 $\mu$m and of at most 2.5 $\mu$m. The average size can be of at least 2.5 $\mu$m and at most 3.0 $\mu$m.

The plurality of first primary particles may include at most twenty first primary particles.

The first fraction may include either one first primary particle or a plurality of first primary particles.

The plurality of first primary particles may include at most twenty first primary particles.

The plurality of second primary particles may include at most twenty second primary particles.

First and second particles consisting of one primary particle can be called monolithic particles whereas first and second particles consisting of a plurality of primary particles, including no more than twenty primary particles, can be called semi monolithic particles.

The cathode active material of the disclosure may be obtainable according to the method of the disclosure. The first and second fraction may result from the ball milling of the first and second sintered materials, respectively. The first fraction may result from ball milling, and optionally subsequently grinding and sieving of the first sintered material. The second fraction may result from ball milling, and optionally subsequently grinding and sieving of the second sintered material.

The cathode active material of the disclosure may have a Li/(x+y+z+a+b) (at%/at%) ratio of $\geq 0.90$, or $\geq 0.95$, or $\leq 1.10$, or $\leq 1.05$ as determined by ICP-OES. The Li/(x+y+z+a+b) (at%/at%) ratio can be of at least 0.90 and of at most 1.10, or of at least 0.95 and of at most 1.05, or of at least 1.00 and of at most 1.10, or of $1.05 \pm 0.05$ as determined by ICP-OES.

Ni content in the cathode active material can be: 50.0 at% $\leq x3 \leq 70.0$ at%, or 60.0 at% $\leq x3 \leq 65.0$ at%, relative to M and as determined by ICP-OES.

Mn content in the cathode active material can be: 0.0 at% $\leq y3 \leq 8.0$ at%, or 0.0 at% $\leq y3 \leq 7.0$ at%, or 5.0 at% $\leq y3 \leq 8.0$ at%, or 5.0 at% $\leq y3 \leq 7.0$ at%, or 6.0 at% $\leq y3 \leq 7.0$ at%, relative to M and as determined by ICP-OES.

Co may be present in the cathode active material in a content: 0.0 at% $\leq z3 \leq 35.0$ at%, or 25.0 at% $\leq z3 \leq 35.0$ at%, or 30.0 at% $\leq z3 \leq 32.0$ at%, relative to M and as determined by ICP-OES.

In another embodiment according to the disclosure:

- Ni content in the cathode active material can be: 50.0 at% $\leq x3 \leq 70.0$ at%, or 60.0 at% $\leq x3 \leq 65.0$ at%, relative to M and as determined by ICP-OES, and
- Mn may be present in the cathode active material in a content: 0.0 at% $\leq y3 \leq 35.0$ at%, or 25.0 at% $\leq y3 \leq 35.0$ at%, or 30.0 at% $\leq y3 \leq 32.0$ at%, relative to M and as determined by ICP-OES, and
- Co content in the cathode active material can be: 0.0 at% $\leq z3 \leq 8.0$ at%, or 0.0 at% $\leq z3 \leq 7.0$ at%, or 5.0 at% $\leq z3 \leq 8.0$ at%, or 5.0 at% $\leq z3 \leq 7.0$ at%, or 6.0 at% $\leq z3 \leq 7.0$ at%, relative to M and as determined by ICP-OES, and
- Q1 may be present in the cathode active material in a content: 0.0 at% $\leq a3 \leq 0.5$ at%, relative to M and as determined by ICP-OES, Q1 can be Sr, and
- Q2 may be present in the cathode active material in a content: 0.0 at% $\leq b3 \leq 0.5$ at%, relative to M and as determined by ICP-OES, Q2 can be Zr and/or Ti.

In another embodiment according to the disclosure:

- Ni content in the cathode active material can be: 60.0 at% $\leq x3 \leq 65.0$ at%, relative to M and as determined by ICP-OES, and
- Mn may be present in the cathode active material in a content: 30 at% $\leq y3 \leq 35.0$ at%, relative to M and as determined by ICP-OES, and
- Co content in the cathode active material can be: 5.0 at% $\leq z3 \leq 7.0$ at%, relative to M and as determined by ICP-OES, and
- Q1 may be present in the cathode active material in a content: 0.0 at% $\leq a3 \leq 0.10$ at%, relative to M and as determined by ICP-OES, Q1 can be Sr, and
- Q2 may be present in the cathode active material in a content: 0.0 at% $\leq b3 \leq 0.25$ at%, relative to M and as determined by ICP-OES, Q2 can be Zr and /or Ti.

Optionally, the cathode active material of the disclosure may consist essentially of Li, O and M, wherein M consists of Ni, Mn, Co, Q1 and Q2, wherein each of these elements is present in the CAM in any of above-described contents.

The cathode active material according to the disclosure may include more elements than Li, M and O. Additional elements can be for instance Na and S. Na and S maybe present in the pCAM as a results of its synthesis route: pCAM can be prepared following a co-precipitation process in a large-scale continuous stirred tank reactor (hereafter referred to as CSTR), with mixed nickel manganese cobalt sulfates, sodium hydroxide, and ammonia. After co-precipitation, the pCAM resulting from CSTR synthesis includes S, respectively from raw NaOH and sulfate(s) of Ni, Mn and Co. The pCAM including S can be reacted with the Li source, the Q1 source, and optionally the Q2 source, as described above, thereby obtaining the CAM that includes S. Such a CAM therefore comprises not only Li, O, Ni, Mn, Q1, Q2, but also S. Indicatively, S can be present in the pCAM in a content of more than 0.0 at% and of at most 0.30 at%, relative to a sum of Ni, Mn and Co content in the pCAM. This element does not affect CAM claimed essential parameters:

- a first cathode active material fraction including first monolithic and/or first semi monolithic particles and having a first $D50^1$,
- a second cathode active material fraction second monolithic and/or second semi monolithic, the second cathode active material having a second $D50^2$,
- both $D50^1$ and $D50^2$ are of at least 3.0 $\mu$m and of at most 4.0 $\mu$m, $D50^1 > D50^2$, $\Delta D50 = ((D50^1 - D50^2)/D50^1)*100$, and $5\% \leq \Delta D50 \leq 10\%$, or $5\% \leq \Delta D50 \leq 9\%$, or $6\% \leq \Delta D50 \leq 9\%$, and
- the first and second primary particles having an average size of at least 1.5 $\mu$m and of at most 2.5 $\mu$m. The average size can be of at least 2.5 $\mu$m and at most 3.0 $\mu$m.

The cathode active material may have a formula defined as follows: $Li_cNi_{x3}Mn_{y3}Co_{z3}Q1_{a3}Q2_{b3}O2$, wherein:

- $0.90 \leq c \leq 1.10$, or $0.95 \leq c \leq 1.05$, or $c = 1.00 \pm 0.01$,
- $45.0$ at% $\leq x3 \leq 98.0$ at%, or $50.0$ at% $\leq x3 \leq 70.0$ at%, or $60.0$ at% $\leq x3 \leq 65.0$ at%,
- $0.0$ at% $\leq y3 \leq 35.0$ at%, or $25.0$ at% $\leq y3 \leq 35.0$ at%, or $30.0$ at% $\leq y3 \leq 32.0$ at%
- $0.0$ at% $\leq z3 \leq 8.0$ at%, or $0.0$ at% $\leq z3 \leq 7.0$ at%, or $5.0$ at% $\leq z3 \leq 8.0$ at%, or $5.0$ at% $\leq z3 \leq 7.0$ at%, or $6.0$ at% $\leq z3 \leq 7.0$ at%,
- $0.0$ at% $\leq a3 \leq 0.10$ at%,
- $0.0$ at% $\leq b3 \leq 0.25$ at%,

wherein $x3+y3+z3+a3+b3 = 1.00$ as determined by ICP-OES, and wherein Q2 can be at least one element of: B, Cr, Fe, Mg, Mo, Na, Nb, S, Si, V, W, Y, Zn, and Zr, Q2 can be Zr and/or Ti, wherein Q1 can be at least one element of Ca, Ba, Mg, Al and Sr, Q1 can be Sr.

In the cathode active material of the present disclosure, the first and second fraction may have the same formula: $Li_{c1}Ni_{x31}Mn_{y31}Co_{z31}Q1_{a31}Q2_{b31}O_2$, wherein:

- $0.90 \leq c1 \leq 1.10$, or $0.95 \leq c1 \leq 1.05$, or $c1 = 1.00 \pm 0.01$,
- $45.0$ at% $\leq x31 \leq 98.0$ at%, or $50.0$ at% $\leq x31 \leq 70.0$ at%, or $60.0$ at% $\leq x31 \leq 65.0$ at%,
- $0.0$ at% $\leq y31 \leq 35.0$ at%, or $25.0$ at% $\leq y31 \leq 35.0$ at%, or $30.0$ at% $\leq y31 \leq 32.0$ at%
- $0.0$ at% $\leq z31 \leq 8.0$ at%, or $0.0$ at% $\leq z31 \leq 7.0$ at%, or $5.0$ at% $\leq z31 \leq 8.0$ at%, or $5.0$ at% $\leq z31 \leq 7.0$ at%, or $6.0$ at% $\leq z31 \leq 7.0$ at%,
- $0.0$ at% $\leq a31 \leq 0.10$ at%,
- $0.0$ at% $\leq b31 \leq 0.25$ at%,

wherein $x31+y31+z31+a31+b31 = 1.00$ as determined by ICP-OES, and wherein Q2 can be at least one element of: B, Cr, Fe, Mg, Mo, Na, Nb, S, Si, V, W, Y, Zn, and Zr, Q2 can be Zr and/or Ti, wherein Q1 can be at least one element of Ca, Ba, Mg, Al and Sr, Q1 can be Sr.

The cathode active material of the disclosure may have a layered structure. For instance, a layered structure of the $\alpha$-NaFeO$_2$ type, or a layered structure of the $\alpha$-NaFeO$_2$ type having a R-3m space group.

Various aspects according to the present disclosure are provided in the claims well as in the specification. The aspects and examples recited in the claims and in the specification are mutually freely combinable unless otherwise explicitly stated.

**BRIEF DESCRIPTION OF THE FIGURES**

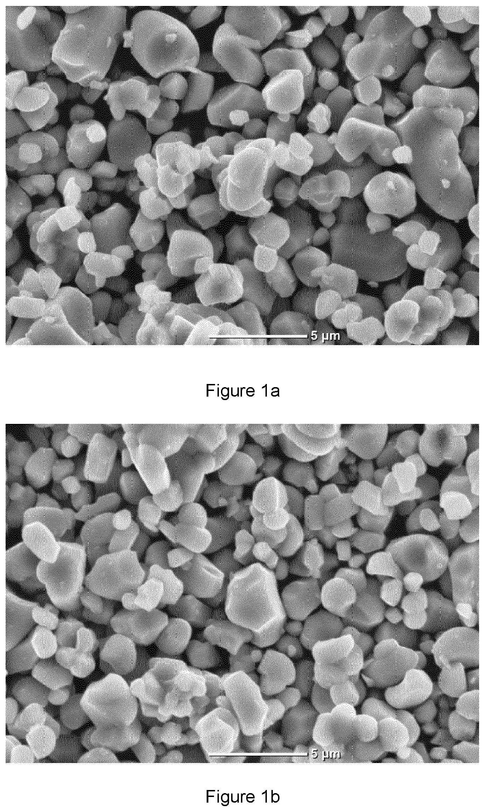

Fig. 1a is a SEM image of EX1 obtained from the CAM of the top tray
Fig. 1b is a SEM image of EX1 obtained from the CAM of the bottom tray

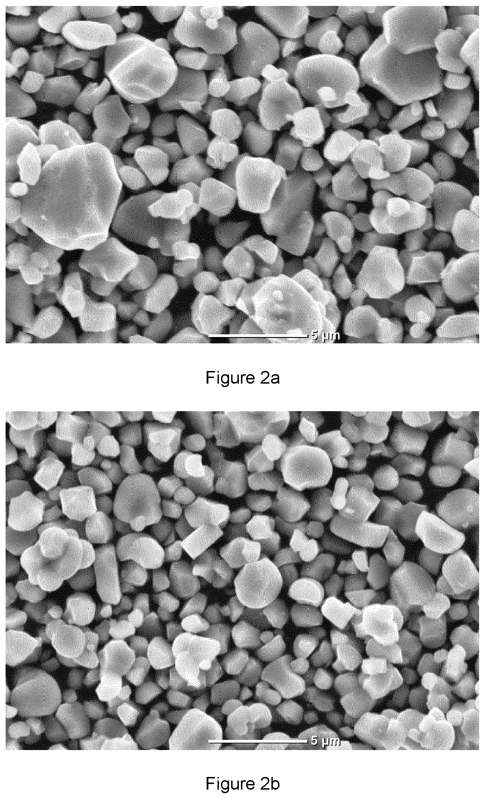

Fig. 2a is a SEM image of CEX1 obtained from the CAM of the top tray
Fig. 2b is a SEM image of CEX1 obtained from the the CAM of bottom tray

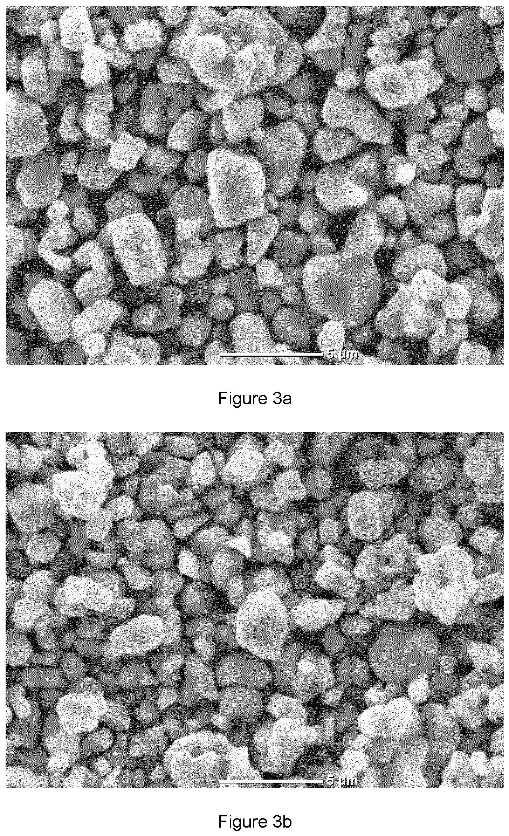

Fig. 3a is a SEM image of CEX2 obtained from the top tray
Fig. 3b is a SEM image of CEX2 obtained from the bottom tray

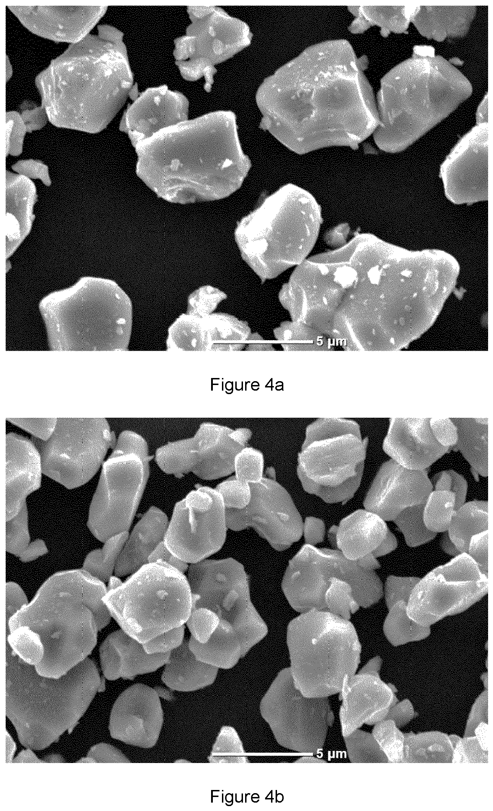

Fig. 4a is a SEM image of CEX3 obtained from the top tray
Fig. 4b is a SEM image of CEX3 obtained from the CAM of the bottom tray
Fig. 5 is a XRD of EX1 obtained from the CAM of the bottom tray

## DETAILED DESCRIPTION

## EXPERIMENTAL ANALYSIS USED IN THE EXAMPLES AND THE

## COMPARATIVE EXAMPLES

The following analysis methods are used in the examples:

A) ICP-OES measurement

Respective amounts of Li, Ni, Co, Mn, Zr, Ti and Sr in the cathode active material powder and precursor powder of the positive electrode active material thereof is measured with the Inductively Coupled Plasme - Optical Emission Spectrometry (ICP-OES) method by using the Agilent ICP 720-ES. 2.0 grams of powder sample is dissolved into 10 mL of high purity hydrochloric acid, at least 37 weight percent (wt%) of HCl with respect to the total weight of solution, in an Erlenmeyer flask. The flask is covered by a glass and heated on a hot plate at 380 °C until complete dissolution of the powder. After being cooled to room temperature, the solution of the Erlenmeyer flask is poured into a 250 mL volumetric flask. Afterwards, the volumetric flask is filled with deionized water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, 50mL of this solution is used for ICP-OES measurement.

ICP-OES provides wt% of each element included in a material whose composition is determined by this technique. Conversion from wt% to at% is as follows: at% of a first element $E_1$ ($E_{at1}$) in a material can be converted from a given wt% of said first element $E_1$ ($E_{wt1}$) in said material by applying the following formula,

$$E_{at1} = \frac{(E_{wt1} / E_{aw1})}{\sum_{i=1}^{n}(E_{wti} / E_{awi})} \times 100\%,$$

wherein $E_{aw1}$ is a standard atomic weight (or molecular weight) of the first element $E_1$, $E_{wti}$ is wt% of an $i^{th}$ element $E_i$, $E_{awi}$ is a standard atomic weight (molecular weight) of said $i^{th}$ element $E_i$, and $n$ is an integer which represents the number of types of all elements included in the cathode active material.

B) SEM measurement

The primary particle sizes of the cathode active material powder are analyzed by a SEM technique. The measurement is performed with a Thermo Scientific Phenom XL G2 under a high vacuum environment of $9.6 \times 10^{-5}$ Pa at 25 °C.

The SEM field of view is of at least 45 $\mu$m x at least 60 $\mu$m (i.e. of at least 2700 $\mu$m$^2$), optionally of at least 100 $\mu$m x 100 $\mu$m (i.e. of at least 10,000 $\mu$m$^2$). Standalone particles in the image should be well distributed therefore avoiding overlap between particles. This can be achieved by pouring a small amount of the CAM powder sample to an adhesive attached on a SEM sample holder and blowing air to remove an excess of powder.

C) Particle size

C-1) Particle size analysis

The PSD of the cathode active material is measured by laser diffraction particle size analysis using a Malvern Mastersizer 3000 with a Hydro MV wet dispersion accessory after having dispersed each of the powder samples in an aqueous medium. In order to improve the dispersion of the powder, sufficient ultrasonic irradiation and stirring are applied, and an appropriate surfactant is introduced. D50 is defined as the particle size at 50% of the cumulative volume% distributions.

C-2) Primary particle size analysis

The diameter of primary particle is calculated by using ImageJ software (ImageJ 1.52a, National Institutes of Health, USA) according to a protocol comprising:

- a step 1) consisting of opening a file containing SEM image of a cathode active material standalone (secondary) particle obtained according to SEM measurement method mentioned in section B) with 2,000 times magnification wherein the image is taken to contain at least 100 primary particles,
- a step 2) consisting of setting a scale according to the SEM magnification, and
- a step 3) consisting of drawing a line following primary particle's edge using 'polygon selections' tool for at least 100 primary particles that are not overlapped with other primary particles, thereby obtaining dawn primary particles perimeter based on a polygon approach from aforementioned 'polygon selections' tool. The primary particles at the edges of the SEM image must be excluded if they are truncated,
- a step 4) consisting of picking the 'Area' box tool from 'Set Measurements' menu, and measuring an area associated to each of the drawn primary particle perimeters.
- a step 5) consisting of calculating a diameter d of each measured areas (associated to the primary particles) by

$$d = 2 \times \sqrt{\frac{area}{\pi}}$$

assuming that each of the particles has a spherical shape, with , thereby obtaining an average primary particles diameter (also referred to as average primary particle size) for at least 100 particles.

D) Powder X-ray Diffraction (XRD)

XRD patterns are recorded on a Bruker D8 Advance X-ray diffractometer in the 10-80 2-theta range in a 0.015 degree scan step. Scan speed is set to 3.0 degrees per minute. The copper target X-ray tube is operated at 40KV and 40mA. The LynxEye XE-T detector is used to capture diffracted X-rays at 3.3 degree opening. The collected XRD patterns comprise KAlpha Cu radiations with typical wavelengths KAlpha1 =1.5418 Å. The incident beam optic setup comprises a 1-degree divergence slit (DS) and 2.5 degree vertical Soller slit. The diffracted beam optic setup includes an automatic anti-scatter slit (SS), and 2.5 degree vertical Soller slit. To prevent fluctuations the temperature is kept near room temperature all the time.

**EXAMPLES**

The examples of the process according to the present disclosure are implemented in a non-limitative way as follows:

- in a first step, a Li source, a CAM precursor, and a source of Sr are blended to obtain a mixture,
- in a second step, the mixture is loaded in trays that are double stacked thereby forming a stack of trays, wherein a top tray loaded with a first faction of the mixture is laid over a bottom tray loaded with a second fraction of the mixture, the bottom tray is destined to be placed on a conveying line of a RHK,
- in a third step, the stack of trays is conveyed by a conveyor belt into the RHK, thereby positioning the bottom tray at a first point location (or bottom location) in a heating portion of the RHK and positioning the top tray at a second point location (or top location) in the heating portion,
- in a fourth step, the stack of trays is heated with a differential of temperature between the bottom location and the top location by applying a first temperature $T_1$ at the bottom location and a second temperature $T_2$ at the top location, thereby heat treating the first fraction of the mixture at $T_1$ and the second fraction of the mixture at $T_2$ to obtain a first and a second sintered materials comprising Li, Ni and Sr, wherein:

$$700°C \leq T_2 \leq 1000°C,$$

$$T_1 = T_2 + \Delta T,$$

$$5°C \leq \Delta T \leq 10°C.$$

In this fourth step, $T_1$ and $T_2$ are controlled and monitored by a control station of the RHK. $T_1$ corresponds to a top-side temperature of the RHK whereas $T_2$ corresponds to a bottom-side temperature of the furnace. A continuous gradient of temperature is created between $T_1$ and $T_2$, so as to allow temperature to decrease during heat treatment from the top-side to the bottom-side of the RHK, i.e., from the top location to the bottom location of the heating portion of the RHK. Indicatively, the continuous gradient has a magnitude of at least 0.2°C/cm and at most 2°C/cm, or at least 0.1°C/cm and at most 2°C/cm.

- in a fifth step, the first and second sintered material are ball milled to obtain a first and second CAM fractions that are subsequently mixed together to produce the final cathode active material.

The present disclosure is further illustrated in the following examples:

Example 1

A cathode active material EX1 is obtained through following steps:

1) **Co-precipitation:** a transition metal hydroxide pCAM with metal composition of $Ni_{0.62}Mn_{0.31}Co_{0.07}$ is prepared following a CSTR route with mixed nickel manganese cobalt sulfates, sodium hydroxide, and ammonia.

2) **Mixing:** pCAM prepared from step (1) can be assigned to the following chemical formula: $Ni_{0.62}Mn_{0.31}Co_{0.07}$ $(OH)_2$. This pCAM is mixed with $Li_2CO_3$, $SrCO_3$ and $ZrO_2$ in an industrial blender to obtain a first mixture having a Li to metal (Ni, Mn, and Co) atomic (or molar) ratio of 1.05, Sr to metal (Ni, Mn, and Co) atomic ratio of 0.03 and a Zr to metal (Ni, Mn, and Co) atomic ratio of 0.09.

3) **Heating:** the mixture obtained from step 1) is placed in double-stacked trays, then trays are conveyed into a RHK and heated for 23 hours under $O_2$ atmosphere in a RHK having a temperature difference between its top-side and its bottom-side of 8°C. The temperature at the top-side of the RHK is 960 °C and the temperature at the bottom side of the furnace is 968 °C, thereby obtaining a sintered material in each of the trays.

4) **Post-heating treatment:** the sintered materials are unloaded from the different trays and separately wet ball milled to obtain several batches of cathode active material powder with desired parameters. The resulting slurry is then filtered and dried at 120°C overnight. These batches are classified as top tray and bottom tray batches. Desired parameters are: (i) chemical composition, (ii) primary particle size, and (iii) D50 of each of the batches of cathode active material is measured and are set out in Table 1 below.

Example 2

EX2 is prepared according to the same method as EX1, except that $Ni_{0.63}Mn_{.32}Co_{0.05}(OH)_2$ is used in the first step of mixing, instead of $Ni_{0.62}Mn_{0.31}Co_{0.07}(OH)_2$.

Comparative Example 1

CEX1 is prepared according to the same method as EX1, except that $TiO_2$ is used in the first mixing instead of $SrCO_3$.

Comparative Example 2

CEX2 is prepared according to the same method as in EX1, except that in the first mixing step, $Ni_{0.62}Mn_{0.31}Co_{0.07}$ $(OH)_2$ is mixed with solely $Li_2CO_3$ and $ZrO_2$.

Comparative Example 3

CEX3 is prepared according to the same method as in EX1, except that in the first mixing step, $Ni_{0.62}Mn_{0.31}Co_{0.07}$ $(OH)_2$ is mixed with solely $Li_2CO_3$ and $ZrO_2$. Also in the heating step, the temperature at the topside and the bottom-side of the RHK is even and of 970 °C.

Table 1 provides examples of suitable heat treatment temperatures $T_1$, $T_2$, and $\Delta T$ as a function of Ni content in the final NMC CAM.

Table 1

| Composition | Ni | T(°C) | | $\Delta T^{**}$ (°C) | t (h) |
|---|---|---|---|---|---|
| | (x) (x') | $T_1^*$ | $T_2^{***}$ | | |
| #NMC1 | 45 (0.45) | 977.0 | 985.2 | 8.3 | 23 |
| #NMC2 | 50.0 (0.50) | 972.0 | 980.1 | 8.2 | 23 |
| #NMC3 | 60.0 (0.60) | 962.0 | 970.0 | 8.0 | 23 |

(continued)

| Composition | Ni | T(°C) | | ΔT** (°C) | t (h) |
|---|---|---|---|---|---|
| | (x) (x') | $T_1$* | $T_2$*** | | |
| #NMC4 | 70.0 (0.70) | 952.0 | 959.9 | 7.8 | 23 |
| #NMC5 | 80 (0.80) | 942.0 | 949.8 | 7.6 | 23 |
| #NMC6 | 90 (0.90) | 931.0 | 938.7 | 7.4 | 23 |

* $T_1$ = 1052 + 50 Log10 (6 / t) - 101 (x / 100)
** ΔT = 11.37 + 2 Log10 (2 / t) - 2 (x / 100)
*** $T_2$ = $T_1$ + ΔT

**Results**

Table 2 below summarizes the chemical compositions, D50, SEM-based primary particle size, and ΔD50 of the cathode active materials from any of the examples and comparative examples.

Table 2

| Examples and Comparative examples ID | Composition* (at%) ICP-OES | | | | | | RHK side | T (°C) | D50 (mm) | Primary particle size (mm) | ΔD50 (%) |
|---|---|---|---|---|---|---|---|---|---|---|---|
| | Ni (x) | Mn (y) | Co (z) | Zr (b) | Sr (a) | Ti (b) | | | | | |
| **EX1** | 61.97 | 30.99 | 6.88 | 0.12 | 0.04 | 0 | Top | 960 | 3.73 | **2.19** | **7.0** |
| | | | | | | | Bottom | 968 | 3.47 | **2.11** | |
| CEX1 | 61.99 | 31.00 | 6.80 | 0.12 | 0 | 0.09 | Top | 960 | 2.68 | 2.50 | 12.0 |
| | | | | | | | Bottom | 968 | 2.36 | 1.95 | |
| CEX2 | 61.99 | 31.00 | 6.89 | 0.12 | 0 | 0 | Top | 960 | 2.65 | 2.33 | 11.3 |
| | | | | | | | Bottom | 968 | 2.35 | 1.97 | |
| CEX3 | 61.99 | 31.00 | 6.88 | 0.13 | 0 | 0 | Top | 970 | 4.85 | 4.15 | 11.3 |
| | | | | | | | Bottom | 970 | 4.30 | 3.57 | |
| **EX2** | 63.10 | 31.61 | 5.13 | 0.12 | 0.04 | 0 | Top | 960 | 3.53 | **2.45** | 8.61 |
| | | | | | | | Bottom | 968 | 3.25 | **2.40** | |

* Composition relative to total molar contents of Ni, Co, Mn, Zr, Sr, and Ti in final CAM

As Table 1 data show, ΔD50 of EX1 and EX2 are lower than 10%. Accordingly, it is confirmed that adding Sr to the mixture containing the CAM precursors and Li source allows to achieve low D50 variability amongst CAM batches from different trays when heated in a stacked design with a differential of temperature between top trays and bottom trays of at least 5°C and no more than 10°C. The CAM according to EXs1 and 2 have an average primary particle size of at least 1.5 μm and of at most 2.5 μm.

While this disclosure describes several examples, it will be understood by those skilled in the art that various changes can be made, and equivalents can be substituted for elements thereof without departing from the scope of the disclosed examples. In addition, many modifications can be made to adapt a particular situation or material to the teachings of this disclosure without departing from the scope thereof. Therefore, it is intended that this disclosure is not limited to the particular examples disclosed as the best mode contemplated for carrying out this disclosure. It should also be understood that the examples disclosed herein should be considered in a descriptive sense only and not for purposes of limitation. Descriptions of features or aspects of each example should be considered as available for other similar features or aspects of other examples.

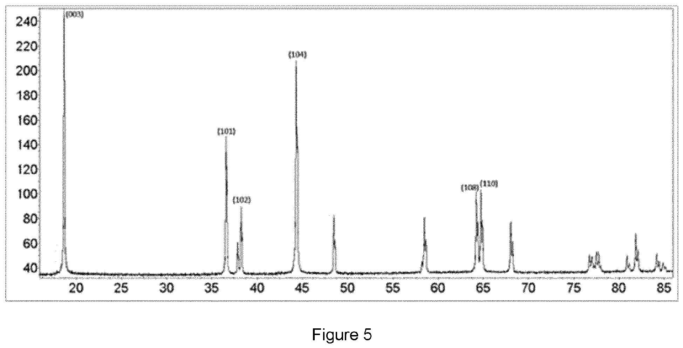

Figure 5 provides an XRD spectrum of a CAM powder of the bottom tray according to EX1. In the XRD spectrum, the x-axis represents the 2-theta angle in degrees, while the y-axis indicates the peak intensity in arbitrary units. The peak of the (104) plane assigned to a crystal structure with space group R-3m is observed at (around) 44.5±1° in an X-ray diffraction pattern. The peaks set of the (003), (104), (101), (012), (108), and (110) planes assigned to a layered structure are observed at 18±1°, 44.5±1°, 37±1°, 39±1°, and splitting at 65±1° in an X-ray diffraction pattern, respectively. Same trend and therefore crystal structure is expected for the CAM of the top tray.

## Claims

1. A method for manufacturing a cathode active material powder comprising Li and optionally Ni, said method including:

   - a first step of mixing a Li source, a precursor, optionally a Ni source, and a source of Q1, thereby obtaining a mixture wherein Q1 is any element of: Sr, Mg, Ca, Ba, and Al,
   - a second step of loading the mixture in at least a first tray and a second tray of a furnace, followed by stacking the first and second trays, thereby obtaining a stack of trays wherein the second tray loaded with a first faction of the mixture is laid over the first tray loaded with a second faction of the mixture, or
   - a third step of loading the mixture in trays of a stack of at least a first and second trays, resulting in the second tray loaded with the first faction of the mixture and laid over the first tray loaded with the second fraction of the mixture,
   - a fourth step of conveying the stack of trays into the furnace, thereby positioning the first tray at a first point location in the furnace and positioning the second tray at a second point location in the furnace,
   - a fifth step of heat treating the stack of trays, optionally under oxidizing atmosphere, with a differential of temperature between the first point location and the second point location by applying a first temperature $T_1$ at the second point location and a second temperature $T_2$ at the first point location , thereby heat treating the first fraction of the mixture at $T_1$ and the second fraction of the mixture at $T_2$ to obtain a first and a second sintered materials comprising Li, Ni and Q2,

   wherein:

   $$700°C \leq T_1 \leq 1000°C,$$

   $$T_2 = T_1 + \Delta T,$$

   $$5°C \leq \Delta T \leq 10°C$$

2. The method according to claim 1, wherein $800°C \leq T_1 \leq 1000°C$, or $900°C \leq T_1 \leq 1000°C$, or $950°C \leq T_1 \leq 1000°C$, or $900°C \leq T_1 \leq 960°C$, or $T_1 = 960°C$.

3. The method according to claim 1 or 2, wherein $965 °C \leq T_2 \leq 970°C$, or $T_2 = 968 °C$.

4. The method according to any of claims 1 to 3, wherein the fifth step of heat treating the stack of trays is conducted during a period of time of at least 5 hours and at most 30 hours, or at least 10 hours and at most 25 hours, or at least 15 hours and at most 20 hours.

5. The method according to any of claims 1 to 4, wherein $T_1 = 1052 + 50 Log10 (6/t) - 101 (x/100)$, wherein t is a duration of the heating treatment expressed in hours and x is the Ni content in the mixture expressed in at%/100, wherein t is of at least 5 hours and at most 30 hours, or at least 10 hours and at most 25 hours, or at least 15 hours and at most 25 hours, or at least 20 hours and at most 25 hours, or of 23 hours

6. The method according to any of claims 1 to 5 , comprising a sixth step of subjecting the first and second sintered materials to milling, thereby obtaining a first and second cathode active material powder having a D50 of at least 3.0 $\mu$m and at most 4.0 $\mu$m.

7. The method according to claim 5 or 6 wherein the first and second cathode active material are mixed together to form a third cathode active material.

8. The method according to any of claims 1 to 5, wherein:

   - the second step consists in loading the mixture into a plurality of trays followed by stacking the plurality of refractory trays between the first and second refractory trays, thereby obtaining a stack of several refractory trays,

or

- the third step consists in loading the mixture into a plurality of trays disposed between the first and second trays of the stack of trays,
- the fourth step consists in conveying the stack of several refractory trays, each loaded with a fraction of the mixture into the furnace, followed by
- the fifth step consisting of heat treating the stack of plurality of trays, thereby heat treating each of the trays loaded with a fraction of the mixture at a sintered temperature higher or equal to $T_1$ and lower of equal to $T_2$ to obtain a plurality of sintered materials.

9. The method according to claims 6 and 8, wherein the sixth step consists in subjecting the plurality of sintered materials to a milling step, thereby obtaining a plurality of cathode active material powders having a D50 of at least 3.0 $\mu$m and at most 4.0 $\mu$m.

10. The method according to claims 7 and 8, wherein the first, the second and the plurality of cathode active material powders are mixed together to form the third cathode active material.

11. The method according to any of claims 1 to 10, wherein the mixture comprises M' and wherein M' includes:

- Ni in a content x1, wherein 45.0 at% $\leq$ x1 $\leq$ 98.0 at%, relative to M',
- Mn in a content y1, wherein 0.0 at% $\leq$ y1 $\leq$ 35.0 at%, relative to M',
- Co in a content z1, wherein 0.0 at% $\leq$ z1 $\leq$ 10.0 at%, relative to M',
- Q1 in a content a, wherein 0.0 at% < a1 $\leq$ 5.0 at%, relative to M', and
- Q2 in a content b, wherein Q2 is an element other than Li, Ni, Co, Mn, and Q1, wherein 0.0 at% $\leq$ b $\leq$ 5.0 at%, relative to M', and Q is at least one element selected from the group consisting of Al, B, Ba, Ca, Cr, Fe, Mg, Mo, Na, Nb, S, Si, Ti, V, W, Y, Zn, and Zr,

wherein x+y+z+a+b is 100.0 at% as determined by ICP-OES.

12. The method according to claim 11, wherein 50.0 at% $\leq$ x1 $\leq$ 70.0 at%, or 60.0 at% $\leq$ x1 $\leq$ 65.0 at%.

13. The method according to any of claims 11 to 12, wherein 25.0 at% $\leq$ y1 $\leq$ 35.0 at%, or 30.0 at% $\leq$ y1 $\leq$ 35.0 at%.

14. The method according to any of claims 11 to 13, wherein Co is in a content 0.0 at% < z1 $\leq$ 10.0 at%, or 5.0 at% $\leq$ z1 $\leq$ 7.0 at%.

15. A cathode active material powder obtainable according to the method of claim 8 or 11, comprising Li, O and M, wherein M includes :

- Ni in a content x3, wherein 45.0 at% $\leq$ x3 $\leq$ 95.0 at%, relative to M,
- Mn in a content y3, wherein 0.0 at% $\leq$ y3 $\leq$ 35.0 at%, relative to M,
- Co in a content z3, wherein 0.0 at% $\leq$ z3 $\leq$ 10.0 at%, relative to M,
- Q1 in a content a3, wherein 0.0 at% < a3 $\leq$ 5.0 at%, relative to M, wherein Q1 is at least one of Sr, Mg, Ca, Ba, and Al, and
- Q2 in a content b3, wherein Q2 is an element other than Li, Ni, Co, Mn, and Q1, wherein 0.0 at% $\leq$ b3 $\leq$ 5.0 at%, relative to M, and Q is at least one element selected from the group consisting of B, Cr, Fe, Mo, Na, Nb, S, Si, Ti, V, W, Y, Zn, and Zr,

wherein x+y+z+a+b is 100.0 at% as determined by ICP-OES, the cathode active material comprising:

- a first cathode active material fraction having first particles consisting of one and/or a plurality of first primary particles, the first cathode active material having a first $D50^1$,
- a second cathode active material fraction having second particles consisting of one and/or a plurality of second primary particles, the second cathode active material having a second $D50^2$,

wherein:

- both $D50^1$ and $D50^2$ are of at least 3.0 $\mu$m and of at most 4.0 $\mu$m, $D50^1 > D50^2$, $\Delta D50 = ((D50^1 - D50^2)/ D50^1)$ *100, and 5% $\leq$ $\Delta D50$ $\leq$ 10%, or 5% $\leq$ $\Delta D50$ $\leq$ 9%, or 6% $\leq$ $\Delta D50$ $\leq$ 9%, and

- the first and second primary particles having an average size of at least 1.5 $\mu$m and of at most 2.5 $\mu$m.

Figure 1a

Figure 1b

Figure 2a

Figure 2b

Figure 3a

Figure 3b

Figure 4a

Figure 4b

Figure 5

| | Europäisches Patentamt |
|---|---|
| | European Patent Office |
| | Office européen des brevets |

# EUROPEAN SEARCH REPORT

**Application Number**

EP 24 18 8886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/121147 A1 (POSCO HOLDINGS INC [KR]; RES INST IND SCIENCE & TECH [KR] ET AL.) 29 June 2023 (2023-06-29) | 15 | INV.<br>C01G53/00<br>H01M4/00 |
| Y | * figures; examples * | 1-14 | |
| X | US 2023/327100 A1 (NI HUAN [CN] ET AL) 12 October 2023 (2023-10-12) | 15 | |
| Y | * figures; examples; tables * | 1-14 | |
| Y | US 2021/143423 A1 (PAULSEN JENS [KR] ET AL) 13 May 2021 (2021-05-13)<br>* paragraph [0118]; figures; examples; tables * | 1-14 | |
| A | US 2023/032577 A1 (AOKI YOSHINORI [JP] ET AL) 2 February 2023 (2023-02-02)<br>* the whole document * | 1-15 | |
| A | US 2023/395796 A1 (WU QI [CN] ET AL) 7 December 2023 (2023-12-07)<br>* the whole document * | 1-15 | **TECHNICAL FIELDS SEARCHED (IPC)** |
| A | US 10 938 030 B2 (SAMSUNG ELECTRONICS CO LTD [KR]; SAMSUNG SDI CO LTD [KR]) 2 March 2021 (2021-03-02)<br>* the whole document * | 1-15 | C01G<br>H01M |
| A | US 2022/006081 A1 (CHOI KWON YOUNG [KR] ET AL) 6 January 2022 (2022-01-06)<br>* the whole document * | 1-15 | |

The present search report has been drawn up for all claims

| Place of search | Date of completion of the search | Examiner |
|---|---|---|
| Munich | 23 December 2024 | Doslik, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 682 108 A1

### ANNEX TO THE EUROPEAN SEARCH REPORT
### ON EUROPEAN PATENT APPLICATION NO.

EP 24 18 8886

23-12-2024

| Patent document cited in search report | | | Publication date | Patent family member(s) | | Publication date |
|---|---|---|---|---|---|---|
| WO 2023121147 | A1 | 29-06-2023 | CN | 118435379 | A | 02-08-2024 |
| | | | EP | 4456188 | A1 | 30-10-2024 |
| | | | KR | 20230095271 | A | 29-06-2023 |
| | | | WO | 2023121147 | A1 | 29-06-2023 |
| US 2023327100 | A1 | 12-10-2023 | CN | 117043982 | A | 10-11-2023 |
| | | | EP | 4273956 | A1 | 08-11-2023 |
| | | | US | 2023327100 | A1 | 12-10-2023 |
| | | | WO | 2023133811 | A1 | 20-07-2023 |
| US 2021143423 | A1 | 13-05-2021 | CN | 112004779 | A | 27-11-2020 |
| | | | EP | 3774661 | A1 | 17-02-2021 |
| | | | HU | E059418 | T2 | 28-11-2022 |
| | | | JP | 7202393 | B2 | 11-01-2023 |
| | | | JP | 2021517721 | A | 26-07-2021 |
| | | | KR | 20200138795 | A | 10-12-2020 |
| | | | PL | 3774661 | T3 | 19-09-2022 |
| | | | US | 2021143423 | A1 | 13-05-2021 |
| | | | WO | 2019185349 | A1 | 03-10-2019 |
| US 2023032577 | A1 | 02-02-2023 | CN | 114762150 | A | 15-07-2022 |
| | | | EP | 4067310 | A1 | 05-10-2022 |
| | | | JP | 7599094 | B2 | 13-12-2024 |
| | | | JP | WO2021106324 | A1 | 03-06-2021 |
| | | | US | 2023032577 | A1 | 02-02-2023 |
| | | | WO | 2021106324 | A1 | 03-06-2021 |
| US 2023395796 | A1 | 07-12-2023 | CN | 115832275 | A | 21-03-2023 |
| | | | EP | 4220767 | A1 | 02-08-2023 |
| | | | JP | 2023547249 | A | 09-11-2023 |
| | | | KR | 20230097138 | A | 30-06-2023 |
| | | | US | 2023395796 | A1 | 07-12-2023 |
| | | | WO | 2023040357 | A1 | 23-03-2023 |
| US 10938030 | B2 | 02-03-2021 | KR | 20180121267 | A | 07-11-2018 |
| | | | US | 2018316005 | A1 | 01-11-2018 |
| US 2022006081 | A1 | 06-01-2022 | CN | 113169332 | A | 23-07-2021 |
| | | | EP | 3859838 | A1 | 04-08-2021 |
| | | | JP | 7300792 | B2 | 30-06-2023 |
| | | | JP | 2022501788 | A | 06-01-2022 |
| | | | KR | 20200036422 | A | 07-04-2020 |
| | | | US | 2022006081 | A1 | 06-01-2022 |
| | | | WO | 2020067795 | A1 | 02-04-2020 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 205505706 U